# DEMANDE DE BREVET EUROPEEN

(11) **EP 2 687 951 A1**
(43) Date de publication de la demande: **22.01.2014**
(21) Numéro de dépôt: 12364004.7
(22) Date de dépôt: 20.07.2012
(51) Int. Cl.: G06F 3/0354

(54) **Touffe de pinceau pour écran tactile numérique**

(71) Demandeur: Bullier sas, 22001 Saint Brieuc (FR)
(72) Inventeur: Bullier, Stéphanie, 22001St. Brieuc Cedex 1 (FR)

(57) **Abrégé**

Touffe de pinceau pour écran numérique tactile caractérisée par un mélange de fibres conductrices avec des fibres synthétiques et/ou poils naturels, les poils et fibres apportant à la touffe les qualités de rigidité, d'élasticité, de résilience et de limitation de la dégradation des fibres conductrices, permettant ainsi une réduction de la taille de la touffe et un accroissement de la précision à l'usage, ainsi qu'une adaptation à toutes les formes et tailles de pinceaux beaux-arts traditionnels et cosmétiques, et de capacités médiumniques en formes et tailles comparables aux pinceaux beaux-arts traditionnels et cosmétiques.

## Description

L'introduction des fonctions tactiles dans les technologies numériques ont fait naitre des produits médiums tels que stylets et pinceaux destinés à ces technologies. Les écrans numériques tactiles utilisent la propriété du corps humain à conduire l'électricité statique, le doigt étant la base du contact entre le corps et l'écran. Sur ce principe, les stylets et pinceaux sont le prolongement du doigt pour effectuer des taches en offrant une précision et une dextérité accrues. La conception de ces outils repose sur le fait que les composants du stylet ou du pinceau doivent être conducteurs du manche au point de contact de l'écran. Les particularités de ces outils sont :
- Pour le stylet : il est utilisé de la même façon que le doigt, car son contact avec l'écran est rigide et arrondi, son seul avantage sur le doigt est que son diamètre est plus petit, donc l'outil est plus précis. Son fonctionnement repose sur le fait qu'il appuie sur l'écran et présente une surface plane d'un diamètre suffisant pour être reconnu de l'écran tactile, comme le fonctionnement du doigt. La composition de sa pointe est en caoutchouc enrichie d'un élément conducteur, elle ne permet pas une glisse facile sur l'écran.
- Le pinceau tactile repose sur le principe de fibres conductrices. Son fonctionnement se réalise de façon opposée au stylet, en ce sens que si l'on présente un pinceau tactile sur sa pointe, la reconnaissance statique ne se fait pas, car la tablette ne reconnait que chaque poil de la touffe et la surface de contact n'est plus suffisante. Pour créer le dit contact, il est nécessaire de présenter les fibres sur leur côté. L'avantage de ce procédé est de décaler la vision du point de contact de façon à ne plus être gêné dans la visibilité par le manche, ce dernier étant posé de façon parallèle à l'écran et non plus perpendiculaire comme le doigt ou le stylet. Enfin la nature des matériaux utilisés pour le pinceau (fibres) permet une glisse naturelle du medium sur l'écran. Cela autorise le même ressenti et les mêmes effets que l'on obtient avec un pinceau conventionnel et son medium (peinture, encre ou maquillage) sur son support.

L'ensemble des pinceaux tactiles reposent sur l'emploi exclusif de fibres synthétiques recouvertes d'un conducteur, souvent métallique constituant la touffe. On constate que ce type de touffe présente de nombreuses limites :
- La surface conductrice apposée sur la fibre s'use très vite par le phénomène de frottement à l'écran et de quantité de courant diffusée. Pour augmenter le temps de vie du pinceau, la technique consiste à augmenter le nombre de fibres, donc le diamètre de touffe, ce qui nuit à la précision et ne fait que pallier de façon provisoire à l'usure.
- La fibre est trop fine et la touffe s'écrase sur l'écran par manque de rigidité. En conséquence : l'effet de nervosité du pinceau conventionnel ne se retrouve pas dans le pinceau tactile, l'écrasement de la touffe entraine un manque de précision du point de contact. Pour pallier à cet écrasement et retrouver un geste naturel, la technologie utilisée consiste à augmenter le diamètre de la touffe, ce qui nuit aussi à la précision de l'outil et l'éloigne du rendu naturel d'un pinceau conventionnel.

### Description de l'invention :

L'invention concerne la conception d'une touffe de pinceau destinée aux écrans numériques tactiles, qui se caractérise par un mélange de fibres conductrices, et de fibres synthétiques et/ou poils naturels.

La fonction des poils et fibres non conducteur est d'apporter à la touffe suffisamment de :
- rigidité afin de garder la forme en pointe de la touffe en fonctionnement appuyé, ce qui garantit la précision de l'outil,
   - élasticité afin d'offrir un confort d'utilisation, et de préserver la sensation du pinceau traditionnel,
   - résilience pour que la touffe reprenne sa forme initiale après emploi, évitant son écrasement,
   - réduction d'usure du fait que les fibres conductrices : sont partiellement protégées par les autres fibres ou poils, qu'elles offrent assez de conductibilité pour garantir la fonction recherchée, sans toutefois fournir trop d'intensité cause de leur dégradation prématurée.

A l'usage, la touffe numérique mélangée est appuyée sur le support et prend un mouvement latéral, qui amplifie la zone d'échange conductrice, tout en préservant la précision souhaitée. Seules les fibres conductrices en contact avec le support sont chargées en électricité statique. La fabrication de la touffe numérique à fibre mélangée demande les mêmes exigences que celle d'un pinceau traditionnel ; son installation sur le pinceau se réalise avec les mêmes contraintes de transfert d'électricité statique que pour un autre pinceau numérique. L'invention garantissant des qualités de rigidité, d'élasticité, de résilience et de solidité, le diamètre de la touffe de pinceau peut être réduit au regard d'un autre pinceau numérique, ce qui permet de gagner en précision à l'usage.

De plus, sa technologie s'accommode de toutes les formes de pinceaux souhaitées, notamment dans le cadre d'une utilisation beaux-arts ou cosmétique numérique. Cette caractéristique s'explique par l'introduction importante de fibres et poils qui constituent également la composition des pinceaux traditionnels dans toute leur variété.

Enfin dès lors que les supports numériques et applications qui s'y rapportent permettront de reconnaitre automatiquement la forme de la touffe à son contact sur l'écran, l'invention permet d'obtenir toutes les variétés médiumniques en formes, effets et tailles présents dans les pinceaux beaux-arts traditionnels et cosmétique. Là encore, cette capacité s'explique par l'introduction de fibres et poils habituellement présents dans les pinceaux traditionnels.

## Revendications

1. Touffe de pinceau pour écran numérique tactile **caractérisée par** un mélange de fibres conductrices avec des fibres synthétiques et/ou poils naturels, les poils et fibres synthétiques apportant à la touffe les qualités de rigidité, d'élasticité, de résilience et de limitation de la dégradation des fibres conductrices, permettant ainsi une réduction du diamètre de la touffe et un accroissement de sa précision à l'usage, ainsi qu'une adaptation à toutes les formes et tailles de pinceaux beaux-arts traditionnels et cosmétiques, et de capacités médiumniques en formes - effets et tailles comparables aux pinceaux beaux-arts traditionnels,

2. Touffe de pinceau pour écran tactile selon la revendication 1 **caractérisée par le fait que** la rigidité obtenue par le mélange de fibres conductrices et de fibres synthétiques et/ou poils naturels maintien la forme en pointe de la touffe lorsque celle-ci est en fonctionnement appuyé, ce qui participe à la précision d'écriture,

3. Touffe de pinceau pour écran tactile selon la revendication 1 **caractérisée en ce que** l'élasticité acquise par le mélange offre un confort d'utilisation et la préservation des sensations acquises sur un pinceau traditionnel,

4. Touffe de pinceau mélangée pour écran tactile selon la revendication 1 **caractérisée en ce que** le mélange permet d'obtenir une résilience de la touffe qui reprend sa forme initiale après emploi,

5. Touffe de pinceau mélangée pour écran tactile selon la revendication 1 **caractérisée en ce que** les fibres synthétiques et poils naturels limitent la dégradation des fibres conductrices, en raison que les fibres conductrices sont partiellement protégées par les autres fibres et poils, et que leur nombre offre assez de conductibilité pour garantir la fonction recherchée sans toutefois fournir trop d'intensité cause de leur dégradation prématurée,

6. Touffe de pinceau mélangée pour écran tactile selon les revendications 1, 2, 3 et 4 **caractérisée en ce que** les fonctions acquises en termes de rigidité, d'élasticité et de résilience apportent une précision médiumnique permettant de réduire le diamètre de la touffe, et par là même d'accroitre encore son niveau de précision,

7. Touffe de pinceau mélangée pour écran tactile selon la revendication 1 **caractérisée en ce que** la technologie de la touffe introduisant des fibres et poils de pinceaux traditionnels, s'accommode de toutes les formes de pinceaux et touffes souhaités notamment dans le cadre d'utilisations beaux-arts et cosmétiques,

8. Touffe de pinceau mélangée pour écran tactile selon la revendication 1 **caractérisée en ce que** l'invention permet d'obtenir toutes les variétés médiumniques en formes, tailles et effets présentes dans les pinceaux beaux-arts traditionnels, du fait de l'introduction de fibres et poils de pinceaux traditionnels dans la touffe,
